Europäisches Patentamt

European Patent Office

Office européen des brevets

(11) Publication number: **0 375 549 B1**

(12) **EUROPEAN PATENT SPECIFICATION**

(45) Date of publication of patent specification: **25.05.94** (51) Int. Cl.⁵: **G01V 1/40**

(21) Application number: **89403580.7**

(22) Date of filing: **20.12.89**

(54) Method and apparatus for performing acoustic investigations in a borehole.

(30) Priority: **22.12.88 US 288742**

(43) Date of publication of application:
**27.06.90 Bulletin 90/26**

(45) Publication of the grant of the patent:
**25.05.94 Bulletin 94/21**

(84) Designated Contracting States:
**DE FR GB IT NL**

(56) References cited:
**US-A- 2 757 358**
**US-A- 3 213 415**

(73) Proprietor: **SCHLUMBERGER LIMITED**
**277 Park Avenue**
**New York, N.Y. 10172(US)**
(84) Designated Contracting States:
**DE GB IT NL**

(73) Proprietor: **SOCIETE DE PROSPECTION ELEC-**
**TRIOUE SCHLUMBERGER**
**42, rue Saint-Dominique**
**F-75007 Paris(FR)**
(84) Designated Contracting States:
**FR**

(72) Inventor: **Kostek, Sergio**

**27 Deer Hill Rd.**
**Redding Connecticut 06896(US)**
Inventor: **Chang, Shu-Kong**
**12 Howes Lane**
**W. Redding Connecticut 06896(US)**
Inventor: **McDaniel, Gordon**
**9901 Club Creek**
**Houston Texas 77036(US)**
Inventor: **Plona, Thomas**
**32 Maple Wood Dr.**
**New Milford Connecticut 06776(US)**
Inventor: **Randall, Curtis**
**2706 Pondbrook**
**Missouri City Texas 77459(US)**

(74) Representative: **Hagel, Francis et al**
**ETUDES ET PRODUCTIONS SCHLUMBERGER**
**Service Brevets**
**B.P. 202**
**F-92142 Clamart Cédex (FR)**

## Description

The present invention relates to exploration for sources of hydrocarbons and particularly to such exploration by acoustic investigations of the properties of the formations traversed by a borehole. More specifically, this invention is directed to an apparatus and method for transmitting an acoustic signal into the formation and for detecting the acoustic signal at a spaced detector after it has propagated through the formation.

After a well has been drilled a number of wireline logs are ordinarily obtained to reveal certain physical characteristics of the formation. Typically, resistivity, neutron and gamma ray investigations, the "Triple Combo", are made to acquire sufficient information to derive values of formation porosity and water saturation. Where additional information is desired, a sonic investigation is sometimes performed in order to obtain another value of porosity, the speed of propagation of sound in the rock and information on the bulk elastic properties of the formation. The information available from the sonic log is then useful in a variety of applications, including well to well correlation, determining porosity, determining the mechanical or elastic parameters of the rock and hence an indication of lithology, detecting overpressured formation zones, and enabling the conversion of a seismic time trace to a depth trace from information acquired on the speed of sound in the formations.

While wireline logs have in the past been the only way to obtain such formation information in situ, recent developments in the oilfield service industry have effected the advent of alternatives to the Triple Combo wireline measurements: namely the resistivity, the neutron and the gamma ray density measurements performed on the drill string while drilling: the "MWD Triple Combo". Previously, the oilfield service industry has not developed a "while drilling" alternative to the fourth most commonly used log, the sonic log.

The basic principle of the sonic log is that an acoustic signal is generated at a transmitting transducer, the signal propagates through the formation to at least one receiving transducer and the first arrival is detected. From knowledge of the time of transmission and the time of the first arrival of acoustic energy at the receiver after having passed through the formation, one can deduce the time of propagation of the signal through the formation which is referred to as interval transit time, $\Delta t$. $\Delta t$ may then be used in the Wyllie time-average equation

$$\Delta t = \Delta t_{solid}(1-\phi) + \Delta t_{fluid}(\phi)$$

to obtain porosity, $\phi$. $\Delta t_{solid}$ and $\Delta t_{fluid}$ are known

from predetermined knowledge of the speed of propagation of sound in various rocks and fluids and by knowing the types of rock and fluid in which the investigation is being made. As an alternative to the Wyllie time average relationship, the more recent "Raymer, Hunt, Gardner" relationship may be utilized.

In order for a sonic tool to be able to detect the first formation arrival, the detected signal must be virtually free of energy launched by the transmitter into the tool body which is then propagated along the tool body to the position of the receiver. Since the speed of propagation of sound in the tool body, which normally steel, can be much higher than that of the formation rock, the tool propagated signal invariably arrives before the formation arrival. Techniques have been developed in the wireline logging industry for attenuating and/or slowing down the tool propagated signal so that the formation arrival may be detected without much interference from the tool propagated signal. In such wireline investigations, the tool is not required to function as a load bearing member so that it has been possible to form an array of staggered openings through the width of the sidewall of the tool's housing. These openings serve to lengthen the total path length that a housing propagated acoustic signal must follow so that the signal across an extremely broad range of frequencies is not only delayed in its transit of the array of holes but is also attenuated as a result of the increased path length and the signal scattering caused by the openings.

United Stated patents 3,191,143; 3,190,388; 3,271,733; 3,493,921; 3,381,267; and 3,213,415 each disclose prior attempts at resolving the problem posed by the propagation of the signal along the tool body. Each of these prior art patents provide techniques that rely on the creation of a tortuous or increased path length for the tool propagated signal, thereby causing the signal to arrive at the detector after the arrival of the formation signal. None of them provide tool bodies having a "straight through" acoustic path from which the acoustic energy does not have to deviate. Consequently, the above listed patents all teach the concept of attenuation of the acoustic energy regardless of frequency by forcing the energy to follow an increased path length, but fail to recognize additional advantages that may be obtained by the creation of an acoustic stop band by sizing and spacing their "obstructions" in such a manner to provide destructive interference of the scattered and reflected acoustic waves.

U.S. patent 2,757,358 discloses a wireline logging apparatus which utilizes a periodic mass loading design in order to attenuate the tool propagated signal rather than a tortuous path of increased path length. This structure produces wave interference and acts as a low pass filter which operates in conjunction with a high pass filter acting on the signal received by the receiver. The combination of the low pass mechanical and the high pass electronic filter is intended to remove the tool propagated signal.

The expedient of providing openings or cuts that extend through the side wall thickness of the member is clearly unsatisfactory for a sonic investigation performed from a drill string or drill collar. In the MWD environment, the investigating tool must be incorporated into a drill collar capable of withstanding the immense forces and accelerations encountered while drilling the hole. If a large number of perforations were to be made through the sidewall of the drill collar, the collar would be weakened to the point that the collar would no longer be able to withstand the forces imposed upon it by the drilling process. Additionally, the fluid isolation between the inside of the drill collar and its exterior would be lost.

Thus, it is not feasible to form the wireline like openings through the entire thickness of a sidewall of the drill collar. Depressions extending through only a fraction of the width of the drill collar have not been thought to be effective since the remaining portion of the drill collar has previously been thought to provide a "straight through" path for the unattenuated propagation of the acoustic signal. Furthermore, the prior art expedient of "convoluting" the sidewall of the tool body so that the body has a uniformly thick, yet tortuous longitudinal cross section is equally unsatisfactory in that such shapes either are too weak or require too large a portion of the limited diameter of the tool. Furthermore, the technique of patent 2,757,358 having a plurality of mass loaded rods is clearly not easily adaptable to the logging while drilling environment.

Nonetheless, both theory and laboratory experiments show that tool propagated signals will dominate the waveforms received at a receiver if the tool body is smooth so that suppression of such signals is essential for the feasibility of sonic logging.

## Summary of the Invention

It has been discovered, through mathematical modeling of cylindrical drill collars, that, due to the cylindrical geometry of the drill collar, a natural notch of stop band exists at a well defined, predetermined frequency at which the sound propagating in the drill collar is naturally attenuated. This stop band occurs in the vicinity of the frequency of transition of the propagation slowness of a mode from one slowness to another. At this frequency, acoustic energy couples well with the surrounding medium and is consequently lost to that medium.

It is proposed therefore to take advantage of this natural stop band phenomenon to made a sonic type of measurement in the drilling environment. Accordingly, one object of the present invention is to transmit acoustic energy preferentially at the stop band frequency and to detect acoustic energy at the stop band frequency as a means of discriminating against the drill collar propagated acoustic signal and of enhancing the detectability of the formation propagated acoustic signal.

In addition, it has been discovered that, having determined the natural stop band frequency, a plurality of axially periodic, substantially circumferentially continuous sections of the drill collar (such as grooves or ridges in the form of circumferential rings or helical threads) with acoustic propagation characteristics different from the drill collar may be provided in such a manner that the acoustic energy at the stop band frequency is further attenuated through a combination of reflection and destructive interference. A periodically sectioned collar produces both slower and weaker collar arrivals, making the formation arrivals detectable in the stop band of the collar. Such sections need only have a thickness equal to less than half of the thickness of the drill collar sidewall. Such sections may either be circumferential mass loads on the drill collar or circumferential grooves cut into the thickness of the sidewall of the drill collar. These sections may be formed alternatively on the interior or the exterior of the drill collar and may be circular or helical.

A further measure found to be beneficial in preventing the interfering propagation of acoustic energy along the length of the drill collar includes mounting both the acoustic transmitter and the acoustic receiver in acoustic isolation from the drill collar. Preferably, the transmitter and receiver may be oriented transversely to the longitudinal axis of the drill collar so as to preferentially launch the acoustic signal toward the formation rather than along the length of the drill collar.

## Brief Description of the Drawings

Figure 1 is a general illustration of a drilling rig and the drill string with a downhole acoustic logging tool in the borehole.

Figure 2 is an illustration of a section of periodically grooved drill collar with internal grooves.

Figure 3 is an illustration of a section of the periodically grooved drill collar with external grooves and graphically showing a transversely mounted transmitter and receiver.

Figure 4 is a plot of frequency against the acoustic propagation slowness for a tubular drill collar illustrating transition regions from smaller slowness to higher slownesses.

Figure 5 is an illustration of a drill collar with randomly positioned depressions extending into the material of the drill collar by a fraction of the thickness of the drill collar.

Figure 6 is a plot of frequency against amplitude for a variety of samples of drill collar including a smooth drill collar, a drill collar having circumferential grooves and a drill collar with randomly positioned depressions.

## Description of the Preferred Embodiment of the Invention

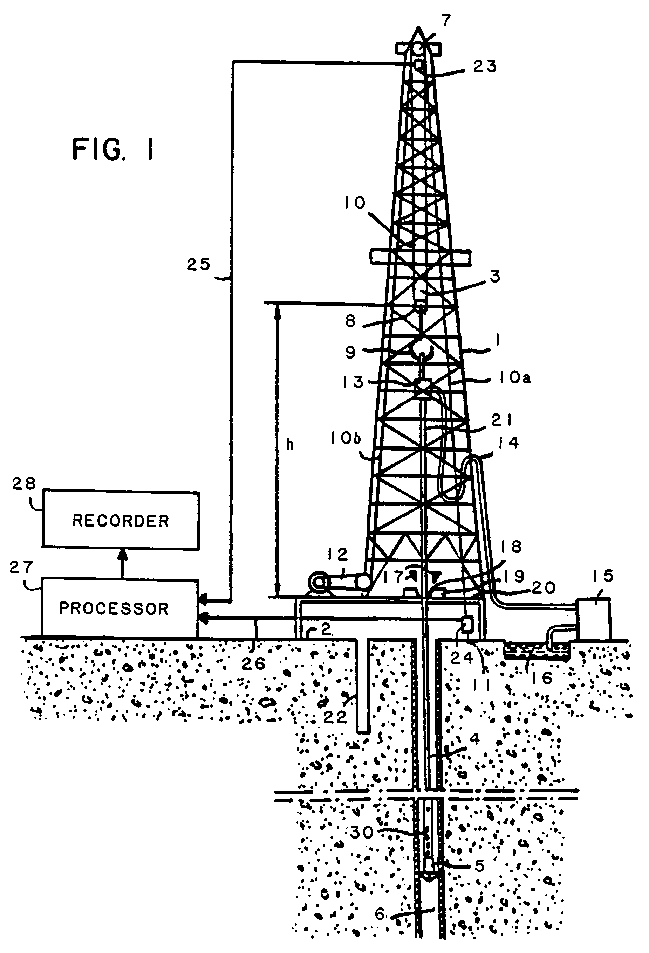

Figure 1 is a general illustration of a drilling rig and the drill string with a downhole acoustic logging tool in the borehole. The rotary drilling rig shown comprises a mast 1 rising above the ground 2 which is fitted with lifting gear 3 from which is suspended a drill string 4 formed of drill pipes screwed one to another and having at its lower end a drill bit 5 for the purpose of drilling a well 6. The lifting gear 3 consists of a crown block 7, the axis of which is fixed to the top of the mast 1, a vertically travelling block 8, to which is attached a hook 9, a cable 10 passing round blocks 7 and 8 and forming, from crown block 7, on one hand a dead line 10a anchored to a fixed point 11 and on the other an active line 10b which winds round the drum of a winch 12.

The drill string 4 is suspended from hook 9 by means of a swivel 13 linked by a hose 14 to a mud pump 15, which permits the injection of drilling mud into the well 6, via the hollow pipes of the drill string 4. The drilling mud may be drawn from a mud pit 16 which may be fed with surplus mud from the well 6. The drill string may be elevated by turning the lifting gear 3 with winch 12 and the drill pipes may be successively removed from (or added to) the well 6 and unscrewed in order to remove the bit 5. These drill pipe raising and lowering operations require the drill string 4 to be temporarily unhooked from the lifting gear 3; the former is then supported by blocking it with wedges 17 in a conical recess 18 in the rotating table 19 mounted on a platform 20 through which the drill string passes. The lowermost portion of the drill string may contain one or more tools, as shown at 30 for investigating downhole drilling conditions or for investigating the properties of the geological formations penetrated by the bit and the borehole 6. The tool 30 shown is an acoustic logging tool having a transmitter and four receivers spaced therefrom. During drilling periods, the drill string 4 is driven in a rotary motion by means of a kelly 21 fitted to its upper end. Between such periods the kelly is stored in a pipe sleeve 22 in the ground.

Variations in the height h of the travelling block 8 during these drill string 4 raising operations are measured by means of a sensor 23 which may be an angle of rotation sensor coupled to the faster pulley of crown block 7. The weight F applied to hook 9 of the travelling block 8 may also be measured by means of a strain gauge 24 inserted into dead line 10a of cable 10 to measure its tension. Sensors 23 and 24 are connected by lines 25 and 26 to a processing unit 27 which processes the measurement signals and which incorporates a clock. A recorder 28 is connected to the processing unit 27, which is preferably a computer.

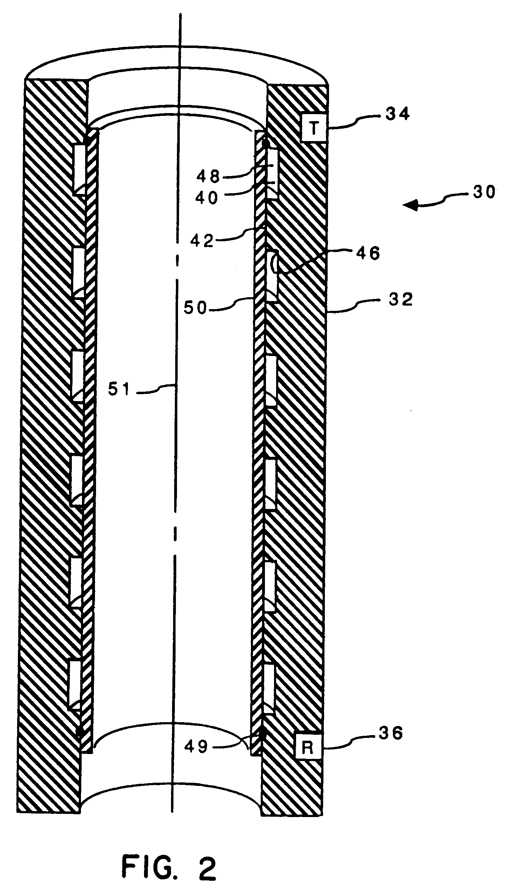

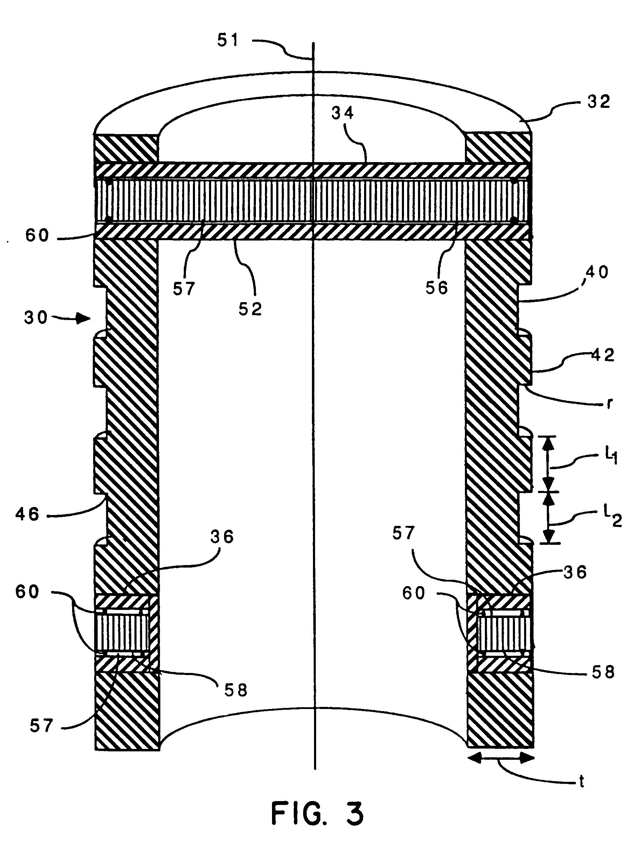

Turning now to Figure 2, the basic components of a sonic logging tool 30 are graphically illustrated. As in most measurement while drilling operations, the tool is formed in a longitudinally extending body adapted for positioning in the borehole. In the drilling environment, this body is a heavy walled drill collar 32 which is basically a thick walled cylinder, (only a portion of which has been shown) with a longitudinal central axis 51. Mounted on the drill collar are an acoustic transmitter 34 and an acoustic receiver 36 spaced therefrom. While only one receiver 36 has been shown in Figures 2 and 3, it is to be understood that it may be preferable to include an array of receivers 36 (as shown in Figure 1) and possibly more than one transmitter for performing borehole compensation as is known. It should also be understood that the figures are not necessarily drawn to scale. For example, in practice, the distance between transmitter 34 and receiver 36 and the number of grooves are much greater than shown.

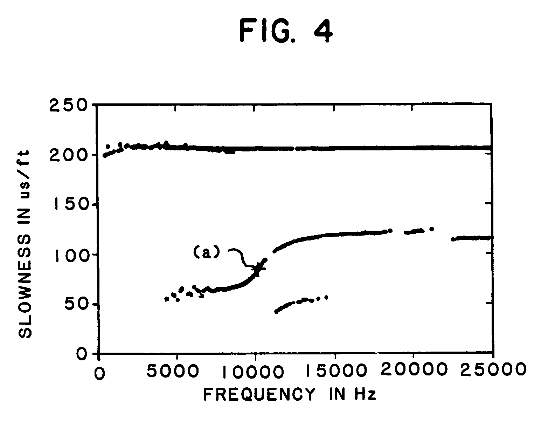

A member such as this heavy walled drill collar supports a number of guided propagation acoustic modes with slowness transition regions, an illustrative example of which appears in Figure 4. For a typical smooth drill collar having an 8.5 inch outside diameter and a 4 inch inside diameter, the first mode travels at the bar velocity (extensional wave) with a slowness of about 60 $\mu$s/ft at low frequency, and it changes to about 150 $\mu$s/ft above 10 kHz. The transition frequency occurs at point (a) at approximately 10 kHz as illustrated in Figure 4 where the wavelength of the extensional wave is about the mean diameter of the collar. A second mode with a slowness near 55 $\mu$s/ft (plate wave slowness) starts at about 10 kHz and changes to about 140 $\mu$s/ft above 15 kHz. The third mode with a similar behaviour occurs above 15 kHz.

In this example, the first mode is highly attenuative at 10 kHz because the collar vibrations couple very well to the fluid at that frequency. Thus, acoustic stop bands exist at the frequencies of the transition regions at which acoustic coupling into the surrounding medium is enhanced. The frequency of transition (point a in Figure 4) between the first and second slownesses of the first mode occurs at about the frequency at which the wavelength of the extensional wave is equal to the mean circumference of the collar. That is:

$$f = kV/(d_1 + d_2)$$

where
$k = 2/\pi$,
$V$ = the bar extensional wave velocity of the collar,
$d_1$ = the inner diameter of the collar, and
$d_2$ = the outer diameter of the collar.
Depending on the properties of the materials from which the drill collar is fabricated and its size, the center frequency may lie in the range of from 3 to 30 kHz.

Accordingly, advantage is taken of the stop band (or notch) by providing transmitters and receivers which operate in the region of the stop band frequency. In this manner, acoustic energy propagating in the drill collar at the stop band frequency is attenuated, giving the receiver 36 an opportunity to detect the energy that is launched into and propagated along the geological formation adjacent to the tool 30.

While attenuation of the smooth collar propagated signal at the stop band frequency, in some circumstances, may be sufficient for the receiving detector to acquire a reasonable formation signal, it is still possible to further enhance the effectiveness of the notch of the stop band by providing the drill collar with means intermediate the transmitter and the receiver for causing further acoustic attenuation at the predetermined frequency of the stop band. This may be done by forming the drill collar with axially discontinuous, substantially circumferentially continuous portions 48 having acoustic propagation characteristics different from those of the drill collar material itself.

For the purposes of this patent, the term axially discontinuous, substantially circumferentially continuous portion is used to include not only a circumferential ring or band but also a thread-like configuration which winds continuously around the drill collar with a pitch to form a helix. Additionally, such language is intended to include the situation where the rings or bands extend all the way around the drill collar except for a portion small relative to the drill collar circumference so long as the desirable acoustic effects of enhancing the stop band is obtained.

Such 48 portions then act as reflectors that cause the acoustic energy to reflect back in the opposite direction. Preferably, such portions have sides facing in the axial direction that are substantially normal to the longitudinal axis of the drill collar. Additionally, it has been discovered that a periodically spaced array of such portions, at the right spacing, may act as a means for not only reflecting and scattering the collar propagating acoustic energy but also for creating destructive wave interference which further reduces the amplitude of the acoustic signal within the stop band.

Such portions are illustrated in figure 2 as rectangular grooves 40 separated by ridges or flats 42 that have preferably been formed on the interior surface of the drill collar 32. Formation of the grooves 40 on the interior of the drill collar has a number of advantages compared to the exterior of the collar including protection from abrasive contact with the borehole wall, a stronger more rigid drill collar, as much as 50% reduction in stress concentrations, and the ability for the groove to have square corners as opposed to rounded corners.

The portions (spaces) 48 are preferably provided with the maximum attainable difference in acoustic propagation properties relative to those of the material of the drill collar. Alternatively, the material of the portions may be selected such that its speed of propagation of sound closely matches that of the drilling fluid so that a minimum of energy is reflected back into the drill collar from the interface between the material of the portion and the drilling fluid. Spaces 48 may be filled with epoxy, rubber, air, oil or other suitable material. In the embodiment shown, the material of choice is air or oil which is maintained by a sleeve 50 which serves to trap the oil and to isolate it from the drilling fluid circulating on the inside of the collar 32. Measures may be taken to hydraulically seal the ends of sleeve 50 with, for example, elastomer O-rings 49 which also serve to provide an acoustic impedance to the energy launched by the transmitter.

Interior corners of grooves 40 are indicated at 46. Where the grooves 40 are formed on the exterior of the drill collar (as illustrated in Figure 3), their interior corners 46 are preferably rounded in order to minimize the stress concentrations created by the formation of the groves. Where the grooves 40 are formed on the interior of the drill collar (as illustrated in Figure 2) where stress concentration is not as great a concern, their interior corners are preferably as square as possible in order to maximize the amount of acoustic signal reflected by the collar/groove interface.

Turning now to Figure 3, another embodiment is illustrated. In this case, grooves 40 have been formed on the exterior of the drill collar 32 and would be either empty (filled with the drilling mud) or filled with epoxy, fiberglass or some other material having significant resistance to the abrasion expected through contact with the borehole wall during the drilling process. Grooves 40 are shown as having depths "r" and widths in the longitudinal

direction "$L_2$". The groves 40 are separated by ridges or flats 42 having widths "$L_1$". Generally, the widths, $L_2$, (and axial spacings, $L_1$, which may preferably be equal to $L_2$) of the grooves may be determined in accordance with the following relationship:

$$L_1 = L_2 = 1/(4fS)$$

where
$L_2$ = the axial length of a portion = the axial spacing, $L_1$, between portions,
f = the predetermined frequency, and
S = the slowness of an acoustic wave propagating in said body.

The thickness of the sidewall of the drill collar 32 is indicated by "t" and is determined to satisfy both the attenuation requirement necessary to successfully detect the formation arrival and a drill collar strength requirement. In one example, drill collar 32 may have an internal diameter of 4 inches, and an external diameter of 8.5 inches so that the thickness, t, of the drill collar is 2.25 inches. In this situation, grooves 40 may have a depth, r, of 1.2 inches and widths, $L_2$, of 5 inches which is also the width, $L_1$, of the flat 42. The above listed dimensions have been found to be satisfactory from both acoustic and mechanical perspectives. The further the separation between transmitter 34 and receiver 36, the better the attenuation of the collar propagated signal. A separation distance of 11 feet has been found to be satisfactory in most conditions to enable the detection of a reasonable formation arrival.

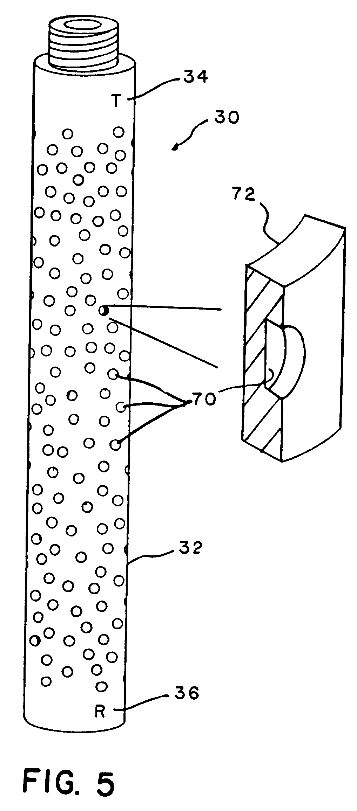

Figure 5 illustrates an additional embodiment for forming an acoustic stop band on a drill collar. In this embodiment, the means for producing a stop band are not circumferentially continuous portions but, rather, are portions 70 formed in the surface (exterior or interior) of the drill collar at random locations. In the specific example illustrated and that has been tested experimentally with a one tenth scale model, portions 70 comprise holes (filled or unfilled as described above with regards to the grooves 40) with diameters and depths of one tenth of an inch. The side wall of the one tenth scale model is comprised of material 72 with a thickness of .15 inches. Unlike the the case of the wireline sonde having holes which are uniformly spaced and which are formed entirely through the sonde housing and which attenuate acoustic energy all along the spectrum, portions 70 enhance the naturally occurring stop band (with a limited frequency range) of the drill collar.

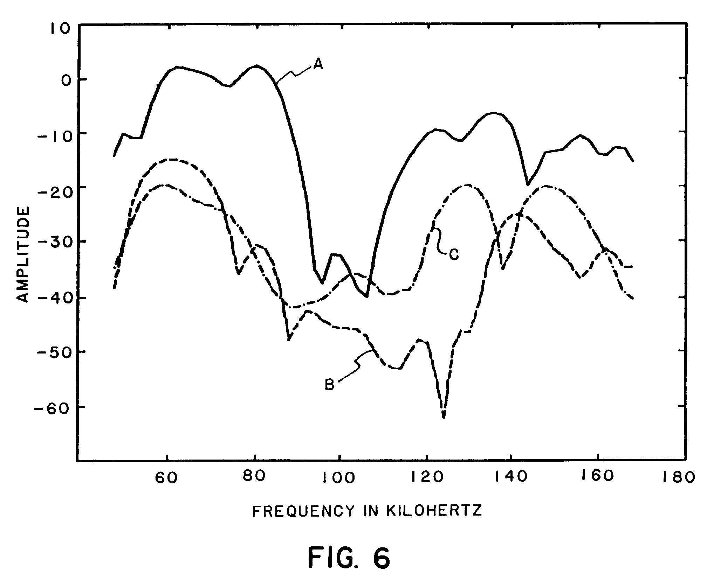

Figure 6 is a representation of the frequency spectra of experimental data derived from three one tenth scale models. The one tenth scale drill collars used in the experimentation had internal diameters of .5 inches and outside diameters of .8 inches. In the Figure, curve A represents the spectrum of a smooth drill collar, curve B represents the spectrum of a drill collar having circumferential exterior grooves through 40% of the thickness of the drill collar, and curve C represents the spectrum of a drill collar having random circular depressions through 67% of the thickness of the drill collar. As can be seen, the attenuation spectrum of curve A shows a natural stop band at approximately 100 kHz (which is equivalent to 10 kHz at full scale) with a band width of approximately 20 kHz (2 kHz full scale). As can be seen from curve B, the addition of external grooves not only deepens the stop band but widens it. Curve C, the curve from a one tenth scale drill collar having randomly positioned circular depressions, has a stop band that has been broadened with some deepening relative to the smooth collar stop band of curve A. It is expected that a drill collar having depressions with a range of diameters would exhibit further broadening of the stop band of curve C. Other combinations of internal and/or external grooves and/or random depressions of the same or different sizes can be utilized to produce other desirable variations. As will be realized by those skilled in the art, dimensions and frequencies for full size drill collars having the features of the models of Figure 6 may be obtained by applying the scale factor of 10.

Figure 3 also shows one possible design of the transmitter and receiver 34 and 36 respectively and of their mounting arrangement. It is a desirable expedient to minimize the acoustic coupling between the transmitter (receiver) and the drill collar in order that the signal propagated by the collar starts as small as possible. Thus the transmitter (receiver) is mounted transverse to the longitudinal axis 51 of the drill collar. Ideally, then, a minimum of acoustic energy is launched in the axial direction and a maximum amount of the energy is launched into the geological formation.

As can be seen from Figure 3, the transducers 56 and 58 are generally cylindrical in shape. Preferably, the transducer 56 acting as the transmitter functions in the range of 3-30 kHz. The transducers may comprise a series of stacked disks of piezoelectric material which are electrically driven to vibrate or resonate in unison. The stack of disks may include mass loads (not shown) at one or both ends in order to tune their resonant frequencies to the stop band frequency of the drill collar. In the preferred embodiment, transmitter 34 is a narrow band transducer emitting a majority of its signal at the frequency of the stop band of the drill collar while receiver 36 is a broader band transducer spanning the stop band of the drill collar. The broader band of the receiver enables a maximum amount of acoustic energy to be received from the adjacent formation after having traveled through the formation from the transmitter 34.

Transducer 56 may be mounted in the drill collar in a transversely extending tube 52. Tube 52 serves to physically and hermetically isolate and seal the transducer from the drilling fluid on the interior of the tool 30. Transducer 56 (and 58) may be acoustically isolated from its mounting tube 52 by means of resilient O-rings 60 which produce an air (or fluid filled) gap 57 between the transducer and the sides of the tube 52. Additional acoustic isolation may be achieved between the transducers and the drill collar 32 by resiliently mounting the tube 52 in the collar (not shown).

Transmitter 34 has been illustrated as comprising a single transducer 56 extending the width of the drill collar while receiver 36 has been illustrated as comprising a pair of transducers 58, one at opposite sides of the drill collar. It should be apparent, however, that both the transmitter and receiver may be of either design. Where the transmitter (or receiver) comprises a pair of transducers, it may be operated in either a monopole (point source) or a dipole (point force) mode.

While drill collars having internal and external portions formed in them for producing acoustic attenuation in a stop band have been described, other means may be found to achieve similar results. For example, rather than machining grooves in the material of the drill collar, it might be found preferable to provide portions which comprise mass loads by fixing bands of material on the exterior or interior of the drill collar. The bands may be affixed to the drill collar by means of heat shrinking or by hot winding a helical strip to the exterior of the collar.

## Claims

1. An apparatus (30) for performing acoustic investigations of subsurface geological formations during the excavation of a borehole, the apparatus (30) characterized by:

    a. a cylindrical drill collar (32) with a longitudinal axis (51) and having an acoustic frequency stop band in a frequency range over which acoustic propagation along said collar (32) is depressed, wherein said frequency range is a function of the geometry of said collar (32);

    b. a transmitter (34) mounted on said collar (32) for preferentially transmitting acoustic energy at a frequency within said stop band at an angle to said axis (51), said transmitter (34) being mounted to be substantially free of acoustic coupling with said collar (32); and

    c. a receiver (36) mounted on said collar (32) and spaced from said transmitter (34) for preferentially receiving acoustic energy at said frequency within said stop band, said receiver (36) being mounted to be substantially free of acoustic coupling with said collar (32).

2. The apparatus (30) as recited in claim 1 wherein said collar (32) comprises axially periodic, substantially circumferentially continuous grooves (40) formed on the interior of said collar (32) intermediate said transmitter (34) and said receiver (36) for causing destructive wave interference in said collar (32) at the frequency range of said stop band.

3. The apparatus (30) as recited in claim 1 wherein said collar (32) comprises axially periodic, substantially circumferentially continuous grooves (40) formed on the exterior of said collar (32) intermediate said transmitter (34) and said receiver (36) for causing destructive wave interference in said collar (32) at the frequency range of said stop band.

4. The apparatus (30) as recited in claim 3 wherein said grooves (40) have rounded interior corners (46).

5. The apparatus (30) as recited in claim 1 further including means (48) an said collar (32) for enhancing said stop band by producing destructive wave interference.

6. The apparatus (30) as recited in claim 1 wherein said collar (32) comprises a plurality of randomly spaced depressions (70) formed in said collar (32) for enhancing said stop band.

7. The apparatus (30) as recited in claim 1 wherein said transmitter (34) comprises an acoustic transmitter transducer (56) and transmitter transducer mounting means for reducing the acoustic coupling between said transmitter transducer (56) and said collar (32), and;

    wherein said receiver (36) comprises an acoustic receiver transducer (58) and receiver transducer mounting means for reducing the acoustic coupling between said receiver transducer (58) and said collar (32).

8. The apparatus (30) as recited in claim 7 wherein said transmitter transducer (56) is mounted transversely of said collar (32).

9. The apparatus (30) as recited in claim 7 wherein said transmitter transducer mounting means comprises resilient means (60) intermediate said transmitter transducer (56) and said collar (32) for acoustically isolating said transmitter transducer (56) from said collar (32); and

wherein said receiver transducer mounting means comprises resilient means (60) intermediate said receiver transducer (58) and said collar (32) for acoustically isolating said receiver transducer (58) from said collar (32).

10. The apparatus (30) as recited in claim 9 wherein said transmitter transducer (56) is mounted in a tube (52) and said tube (52) is mounted in said collar (32).

11. The apparatus (30) as recited in claim 10 wherein said tube (52) radially traverses said collar (32).

12. The apparatus (30) as recited in claim 10 wherein said resilient means (60) creates a fluid-filled gap (57) between said transmitter transducer (56) and said collar (32).

13. The apparatus (30) as recited in claim 1 wherein said collar (32) comprises axially discontinuous portions (48) with acoustic wave propagation characteristics different from those of said collar (32), said portions (48) being sized and spaced to cause destructive wave interference in said collar (32) at the frequency of said stop band.

14. The apparatus (30) as recited in claim 13 wherein said portions (48) extend inwardly from the exterior of said collar (32).

15. The apparatus (30) as recited in claim 13 wherein said portions (48) extend outwardly from the interior of said collar (32).

16. The apparatus (30) as recited in claim 13 wherein said portions (48) are grooves (40) which contain a material dissimilar from the material of said collar (32).

17. The apparatus (30) as recited in claim 13 wherein said axially discontinuous portions (48) have spiral configurations.

18. The apparatus (30) as recited in claim 1 wherein said transmitter (34) is mounted on said collar (32) to emit acoustic energy substantially normal to said longitudinal axis (51).

19. The apparatus (30) as recited in claim 1 wherein said frequency within said stop band is in the range of 3-30 kilohertz.

20. The apparatus (30) as recited in claim 1 wherein said frequency (f) within said stop band is determined in accordance with the following relationship:

$$f = kV/(d_1 + d_2)$$

where
$k = 2/\pi$,
$V$ = the bar extensional wave velocity of the collar (32),
$d_1$ = the inner diameter of the collar (32), and
$d_2$ = the outer diameter of the collar (32).

21. The apparatus (30) as recited in claim 13 wherein said portions (48) have equal axial widths ($L_2$) and axial spacings ($L_1$) one from another which are determined in accordance with the following relationship:

$$L_1 = L_2 = 1/(4fS)$$

where
$L_2$ = the axial width of a portion (48) = the axial spacing, $L_1$, between portions (48),
$f$ = the frequency within said stop band, and
$S$ = the slowness of an acoustic wave propagating in said collar (32).

22. A method for performing sonic logging investigations of geological formations traversed by a borehole, comprising the steps of:

a. preferentially transmitting acoustic energy into the formation at a predetermined frequency from a first location on a cylindrical body in said borehole;

b. receiving acoustic energy from said formation at a second location on said body; and

c. attenuating, at a location intermediate said first and second locations, acoustic energy in a stop band spanning said predetermined frequency, wherein the frequency range of said stop band is a naturally occurring function of the geometry of said body.

23. The method as recited in claim 22 wherein said attenuating step occurs by means of destructive wave interference.

24. The method as recited in claim 22 wherein said receiving step includes preferentially receiving acoustic energy over a frequency band spanning said stop band.

**25.** The method as recited in claim 22 wherein said acoustic energy is transmitted and received substantially normally to the longitudinal axis of said body.

**Patentansprüche**

**1.** Eine Vorrichtung (30) für das Durchführen akustischer Untersuchungen untertägiger geologischer Formationen während des Abteufens eines Bohrlochs, welche Vorrichtung (30) gekennzeichnet ist durch:

a. einen zylindrischen Bohrkragen (32) mit einer Längsachse (51) und mit einem Akustikfrequenzsperrband in einem Frequenzbereich, in dem die akustische Ausbreitung längs des Kragens (32) unterdrückt wird, wobei der Frequenzbereich eine Funktion der Geometrie des Kragens (32) ist;

b. einen an dem Kragen (32) montierten Sender (34) für die vorzugsweise Aussendung akustischer Energie bei einer Frequenz innerhalb des Sperrbandes unter einem Winkel gegen die Achse (51), welcher Sender (34) so montiert ist, daß er im wesentlichen frei von akustischer Kopplung mit dem Kragen (32) ist; und

c. einen an dem Kragen (32) montierten Empfänger (36) im Abstand von dem Sender (34) für den bevorzugten Empfang akustischer Energie bei der Frequenz innerhalb des Sperrbandes, welcher Empfänger (36) so montiert ist, daß er im wesentlichen frei von akustischer Kopplung mit dem Kragen (32) ist.

**2.** Die Vorrichtung (30) nach Anspruch 1, bei der der Kragen (32) axialperiodische, im wesentlichen in Umfangsrichtung verlaufende kontinuierliche Nuten (40) umfaßt, ausgebildet auf der Innenseite des Kragens (32) zwischen dem Sender (34) und dem Empfänger (36) für das Bewirken destruktiver Welleninterferenzen in dem Kragen (32) bei dem Frequenzbereich des Sperrbandes.

**3.** Die Vorrichtung (30) nach Anspruch 1, bei der der Kragen (32) axialperiodische, im wesentlichen in Umfangsrichtung kontinuierliche Nuten (40) umfaßt, ausgebildet auf der Außenseite des Kragens (32) zwischen dem Sender (34) und dem Empfänger (36) für das Bewirken destruktiver Welleninterferenzen in dem Kragen (32) bei dem Frequenzbereich des Sperrbandes.

**4.** Die Vorrichtung (30) nach Anspruch 3, bei der die Nuten (40) abgerundete Innenecken (46) aufweisen.

**5.** Die Vorrichtung (30) nach Anspruch 1, ferner umfassend Mittel (48) auf dem Kragen (32) für das Verstärken des Sperrbandes durch Erzeugen destruktiver Welleninterferenz.

**6.** Die Vorrichtung (30) nach Anspruch 1, bei der der Kragen (32) eine Mehrzahl von zufällig beabstandeten Ausnehmungen (70) auf dem Kragen (32) für das Verstärken des Sperrbandes aufweist.

**7.** Die Vorrichtung (30) nach Anspruch 1, bei der der Sender (34) einen akustischen Sendeumsetzer (56) umfaßt und Sendeumsetzermontagemittel für das Verringern der akustischen Kopplung zwischen dem Sendeumsetzer (56) und dem Kragen (32); und

bei der der Empfänger (36) einen akustischen Empfangsumsetzer (58) und Empfangsumsetzermontagemittel umfaßt für das Verringern der akustischen Kupplung zwischen dem Empfangsumsetzer (58) und dem Kragen (32).

**8.** Die Vorrichtung (30) nach Anspruch 7, bei der der Sendeumsetzer (56) quer bezüglich des Kragens (32) montiert ist.

**9.** Die Vorrichtung (30) nach Anspruch 7, bei der die Sendeumsetzermontagemittel federnde Mittel (60) zwischen dem Sendeumsetzer (56) und dem Kragen (32) umfassen für die akustische Isolation des Sendeumsetzters (56) von dem Kragen (32); und

bei dem die Empfangsumsetzermontagemittel federnde Mittel (60) umfassen zwischen dem Empfangsumsetzer (58) und dem Kragen (32) für die akustische Isolation des Empfangsumsetzers (58) von dem Kragen (32).

**10.** Die Vorrichtung (30) nach Anspruch 9, bei der der Sendeumsetzer (56) in einem Rohr (52) montiert ist, und das Rohr (52) in dem Kragen (32) montiert ist.

**11.** Die Vorrichtung (30) nach Anspruch 10, bei der das Rohr (52) radial den Kragen (32) durchsetzt.

**12.** Die Vorrichtung (30) nach Anspruch 10, bei der die federnden Mittel (60) einen fluidgefüllten Spalt (57) zwischen dem Sendeumsetzer (56) und dem Kragen (32) erzeugen.

**13.** Die Vorrichtung (30) nach Anspruch 1, bei der der Kragen (32) axial diskontinuierliche Abschnitte (48) umfaßt mit Akustikwellenausbreitungscharakteristiken, die abweichen von jenen des Kragens (32), welche Abschnitte (48) bemessen und beabstandet sind zum Hervorrufen destruktiver Welleninterferenz in dem Kragen (32) bei der Frequenz des Sperrbandes.

14. Die Vorrichtung (30) nach Anspruch 13, bei der die Abschnitte (48) sich vom Äußeren des Kragens (32) nach innen erstrecken.

15. Die Vorrichtung (30) nach Anspruch 13, bei der die Abschnitte (48) sich vom Inneren des Kragens (32) nach außen erstrecken.

16. Die Vorrichtung (30) nach Anspruch 13, bei der die Abschnitte (48) Nuten (40) sind, die ein Material enthalten, das ungleich dem Material des Kragens (32) ist.

17. Die Vorrichtung (30) nach Anspruch 13, bei der die axial diskontinuierlichen Abschnitte (48) spiralige Konfigurationen besitzen.

18. Die Vorrichtung (30) nach Anspruch 1, bei der der Sender (34) an dem Kragen (32) montiert ist zum Emittieren akustischer Energie im wesentlichen senkrecht zu der Längsachse (51).

19. Die Vorrichtung (30) nach Anspruch 1, bei der die Frequenz innerhalb des Sperrbandes im Bereich von 3-30 kHz liegt.

20. Die Vorrichtung (30) nach Anspruch 1, bei der die Frequenz (f) innerhalb des Sperrbandes bestimmt wird gemäß der folgenden Beziehung:

$$f = kV/(d_1 + d_2)$$

worin

$k =$     $2/\pi$ ,

$V =$     die Stabextensionswellengeschwindigkeit des Kragens (32) ist,

$d_1 =$     der Innendurchmesser des Kragens (32) ist, und

$d_2 =$     der Außendurchmesser des Kragens (32) ist.

21. Die Vorrichtung (30) nach Anspruch 13, bei der die Abschnitte (48) gleiche axiale Weite ($L_2$) und axiale Abstände ($L_1$) voneinander haben, die bestimmt werden gemäß der folgenden Beziehung:

$$L_1 = L_2 = 1/(4fS)$$

worin

$L_2 =$     die axiale Weite eines Abschnitts (48) = dem Axialabstand $L_1$ zwischen den Abschnitten (48) ist,

$f =$     die Frequenz innerhalb des Sperrbandes ist, und

$S =$     die Langsamkeit einer akustischen Welle ist, die sich in dem Kragen (32) ausbreitet.

22. Ein Verfahren für das Ausführen von sonaren Loguntersuchungen geologischer, von einem Bohrloch durchteufter Formationen, umfassend die Schritte:

a. vorzugsweises Aussenden akustischer Energie in die Formation bei einer vorbestimmten Frequenz von einer ersten Stelle auf einem zylindrischen Korpus in dem Bohrloch;

b. Empfangen akustischer Energie aus der Formation an einer zweiten Stelle an dem Korpus; und

c. Dämpfen, an einer Stelle zwischen der ersten und der zweiten Stelle, akustischer Energie in einem Sperrband, das die vorbestimmte Frequenz überdeckt, wobei der Frequenzbereich des Sperrbandes eine natürlicherweise auftretende Funktion der Geometrie des Korpus ist.

23. Das Verfahren nach Anspruch 22, bei dem der Dämpfungsschritt auftritt mittels destruktiver Welleninterferenz.

24. Das Verfahren nach Anspruch 22, bei dem der Empfangsschritt das vorzugsweise Empfangen akustischer Energie über einem Frequenzband, das das Sperrband überspannt, umfaßt.

25. Das Verfahren nach Anspruch 22, bei dem die akustische Energie im wesentlichen senkrecht zur Längsachse des Korpus ausgesandt und empfangen wird.

**Revendications**

1. Dispositif (30) pour effectuer des mesures acoustiques de formations géologiques du sous-sol pendant le forage d'un sondage, le dispositif (30) étant caractérisé par :

a. une masse-tige cylindrique (32) ayant un axe longitudinal (51) et comportant une bande de blocage de fréquences acoustiques située dans une gamme de fréquences pour laquelle la propagation acoustique le long de ladite masse-tige (32) est atténuée, ladite gamme de fréquences étant fonction de la géométrie de ladite masse-tige (32);

b. un émetteur (34) monté sur ladite masse-tige (32) pour émettre de préférence de l'énergie acoustique à une fréquence de ladite bande de blocage selon un certain angle par rapport audit axe (51), ledit émetteur (34) étant monté sensiblement sans couplage acoustique avec ladite masse-tige (32); et,

c. un récepteur (36) monté sur ladite masse-tige (32) et espacé dudit émetteur (34) pour recevoir de préférence de l'énergie acoustique à ladite fréquence de ladite bande de blocage, ledit récepteur (36) étant monté sensiblement sans couplage acoustique avec ladite masse-tige (32).

2. Dispositif (30) selon la revendication 1, dans lequel ladite masse-tige (32) comprend des cannelures (40) axialement périodiques, sensiblement continues le long de la circonférence, formées à l'intérieur de ladite masse-tige (32) entre ledit émetteur (34) et ledit récepteur (36) pour produire des interférences d'ondes destructrices dans ladite masse-tige (32) dans la gamme de fréquences de ladite bande de blocage.

3. Dispositif (30) selon la revendication 1, dans lequel ladite masse-tige (32) comprend des cannelures (40) axialement périodiques, sensiblement continues le long de la circonférence, formée à l'extérieur de ladite masse-tige (32) entre ledit émetteur (34) et ledit récepteur (36) pour produire des interférences d'ondes destructrices dans ladite masse-tige (32) dans la gamme de fréquences de ladite bande de blocage.

4. Dispositif (30) selon la revendication 3, dans lequel lesdites cannelures (40) comportent des coins intérieurs arrondis (46).

5. Dispositif (30) selon la revendication 1, incluant en outre un moyen (48) sur ladite masse-tige (32) pour améliorer ladite bande de blocage en produisant des interférences d'ondes destructrices.

6. Dispositif (30) selon la revendication 1, dans lequel ladite masse-tige (32) comprend une pluralité de creux (70) espacés de façon aléatoire formés dans ladite masse-tige (32) pour améliorer ladite bande de blocage.

7. Dispositif (30) selon la revendication 1, dans lequel ledit émetteur (34) comprend un transducteur d'émission acoustique (56) et un moyen de montage du transducteur d'émission pour réduire le couplage acoustique entre ledit transducteur (56) et ladite masse-tige (32); et,

dans lequel ledit récepteur (36) comprend un transducteur de réception acoustique (58) et un moyen de montage du transducteur de réception pour réduire le couplage acoustique entre ledit transducteur de réception (58) et ladite masse-tige (32).

8. Dispositif (30) selon la revendication 7, dans lequel ledit transducteur d'émission (56) est monté transversalement par rapport à ladite masse-tige (32).

9. Dispositif (30) selon la revendication 7, dans lequel ledit moyen de montage du transducteur d'émission comprend un moyen élastique (60) entre ledit transducteur d'émission (56) et ladite masse-tige (32) pour isoler acoustiquement ledit transducteur d'émission (56) de ladite masse-tige (32); et,

dans lequel ledit moyen de montage de transducteur de réception comprend un moyen élastique (60) entre ledit transducteur de réception (58) et ladite masse-tige (32) pour isoler acoustiquement ledit transducteur de réception (58) de ladite masse-tige (32).

10. Dispositif (30) selon la revendication 9, dans lequel ledit transducteur d'émission (56) est monté dans un tube (52) et ledit tube (52) est monté dans ladite masse-tige (32).

11. Dispositif (30) selon la revendication 10, dans lequel ledit tube (52) traverse radialement ladite masse-tige (32).

12. Dispositif (30) selon la revendication 10, dans lequel ledit moyen élastique (60) crée un espace rempli de fluide (57) entre ledit transducteur d'émission (56) et ladite masse-tige (32).

13. Dispositif (30) selon la revendication 1, dans lequel ladite masse-tige (32) comprend des parties (48) discontinues dans la direction axiale et ayant des caractéristiques de propagation d'ondes acoustiques différentes de celles de ladite masse-tige (32), lesdites parties (48) ayant des dimensions et des espacement adaptés à produire des interférences d'ondes destructrices dans ladite masse-tige (32) à la fréquence de ladite bande de blocage.

14. Dispositif (30) selon la revendication 13, dans lequel lesdites parties (48) s'étendent intérieurement à partir de l'extérieur de ladite masse-tige (32).

**15.** Dispositif (30) selon la revendication 13, dans lequel lesdites parties (48) s'étendent extérieurement à partir de l'intérieur de ladite masse-tige (32).

**16.** Dispositif (30) selon la revendication 13, dans lequel lesdites parties (48) sont des cannelures (40) qui contiennent un matériau dissemblable du matériau de ladite masse-tige (32).

**17.** Dispositif (30) selon la revendication 13, dans lequel lesdites parties discontinues dans la direction axiale (48) ont des configurations en spirale.

**18.** Dispositif (30) selon la revendication 1, dans lequel ledit émetteur (34) est monté sur ladite masse-tige (32) pour émettre une énergie acoustique sensiblement perpendiculaire audit axe longitudinal (51).

**19.** Dispositif (30) selon la revendication 1, dans lequel ladite fréquence dans ladite bande de blocage est comprise dans la gamme de 3-30 kilohertz.

**20.** Dispositif (30) selon la revendication 1, dans lequel ladite fréquence (f) dans ladite bande de blocage est déterminée selon la relation suivante :

$$f = kV/(d_1 + d_2)$$

où

$k =$      $2/\pi$,

$V =$      la vitesse de propagation longitudinale des ondes dans la masse-tige (32),

$d_1 =$      le diamètre intérieur de la masse-tige (32), et

$d_2 =$      le diamètre extérieur de la masse-tige (32).

**21.** Dispositif (30) selon la revendication 13, dans lequel lesdites parties (48) ont des largeurs axiales ($L_2$) et des espacements axiaux ($L_1$) égaux entre eux qui sont déterminés selon la relation suivante :

$$L_1 = L_2 = 1/(4fS)$$

où

$L_2 =$      la largeur axiale d'une partie (48) = l'espacement axial $L_1$ entre les parties (48),

$f =$      la fréquence dans ladite bande de blocage, et

$S =$      la lenteur de propagation des ondes acoustiques dans ladite masse-tige (32).

**22.** Procédé pour effectuer des mesures acoustiques de diagraphie des formations géologiques traversées par un sondage, comprenant les étapes suivantes :

a. émettre des préférence de l'énergie acoustique dans la formation à une fréquence prédéterminée à partir d'un premier emplacement d'un corps cylindrique placé dans ledit sondage;

b. recevoir de l'énergie acoustique de ladite formation à un second emplacement dudit corps; et,

c. atténuer, à un emplacement entre ledit premier et ledit second emplacement, l'énergie acoustique dans une bande de blocage recouvrant ladite fréquence prédéterminée, la gamme de fréquences de ladite bande de blocage étant une fonction naturelle de la géométrie dudit corps.

**23.** Procédé selon la revendication 22, dans lequel ladite étape d'atténuation se produit au moyen d'interférences d'ondes destructrices.

**24.** Procédé selon la revendication 22, dans lequel ladite étape de réception comprend de préférence la réception d'une énergie acoustique dans toute une gamme de fréquences recouvrant ladite bande de blocage.

**25.** Procédé selon la revendication 22, dans lequel ladite énergie acoustique est émise et reçue sensiblement perpendiculairement à l'axe longitudinal dudit corps.

FIG. 1

FIG. 2

14

FIG. 3

# FIG. 4

FIG. 5

FIG. 6